# EUROPEAN PATENT APPLICATION

(11) **EP 2 065 303 A2**
(43) Date of publication of application: **03.06.2009**
(21) Application number: 08253761.4
(22) Date of filing: 19.11.2008
(51) Int. Cl.: B64C 1/14

(54) **Combined gearbox breather and drain mast for a jet aircraft engine**

(30) Priority: 28.11.2007 US 946216
(71) Applicant: United Technologies Corporation, Hartford, CT 06101 (US)
(72) Inventor: Zysman, Steven H., Amston, CT 06231 (US)
(74) Representative: Leckey, David Herbert

(57) **Abstract**

A combined gearbox breather and drain mast (30) is mounted to a nacelle (12). The combined gearbox breather and drain mast (30) is made of a composite material and includes a body portion made of a single component with a first passage (34) in fluid communication with a gearbox (28) and a second passage (46) in fluid communication with an engine component (70). The first passage (34) is separate from the second passage (46).

## Description

### BACKGROUND OF THE INVENTION

This invention relates generally to a combined gearbox breather and drain mast for a jet aircraft engine.

In a jet aircraft engine, an aircraft engine assembly drives a gearbox that provides drive to engine accessories. During use, pressure can build up in the gearbox. An air oil mist from the gearbox flows through a round breather pipe and through a narrow passage of a breather to provide ventilation to reduce pressure build up in the gearbox. The air oil mist should be kept away from a nacelle to minimize contact of the oil with the seals and other components.

Certain jet engine components require drain lines should these components leak fluids, such as oil or fuel. These flammable fluids must be carried away from the engine and outside the nacelle for safety. A steel mast that extends radially away from the nacelle and houses individual drain lines is employed to carry the fluids away from the respective engine components. The fluids are drained outside the nacelle through a gravity feed system. The drain mast and breather tube are separate components.

A metal transition piece is used to connect the round breather pipe to the narrow passage of the breather. The metal transition piece is heavy and expensive. Custom metal tubes are also employed to carry the excess liquids from the engine components to the drain mast, which are costly.

There is a need in the art for a combined gearbox breather and drain mast for an aircraft engine that overcomes the disadvantages and shortcomings of the prior art.

### SUMMARY OF THE INVENTION

A combined gearbox breather and drain mast includes a body portion made of a single component and a first passage in fluid communication with a gearbox and a second passage in fluid communication with an engine component. The first passage is separate from the second passage. The combined gearbox breather and drain mast may be made of a composite material. In one example, the composite material is ceramic.

In an embodiment the combined gearbox breather and drain mast is mounted on an underside of a nacelle suspended from an aircraft. An engine assembly that drives the gearbox is enclosed by the nacelle. The gearbox provides drive for engine accessories. An air oil mist from bearing compartments of the gearbox flows through a breather pipe and is directed through the first passage. An inlet of the first passage is substantially circular, and an outlet of the first passage is substantially oval. Excess fluids from the engine component flow through drain lines and are directed to the second passage. The fluids drain from an outlet on a side surface of the combined gearbox breather and drain mast. In one example, the internal drain passage includes two branches each including three outlets.

These and other features of the present invention can be best understood from the following specification and drawings, the following of which is a brief description.

### BRIEF DESCRIPTION OF THE DRAWINGS

Figure 1 is a perspective view of an example nacelle including a combined gearbox breather and drain mast;
Figure 2 illustrates a side view of the combined gearbox breather and drain mast;
Figure 3 illustrates a perspective view of the combined gearbox breather and drain mast; and
Figure 4 illustrates an internal view of the passages in the combined gearbox breather and drain mast.

### DETAILED DESCRIPTION OF THE PREFERRED EMBODIMENT

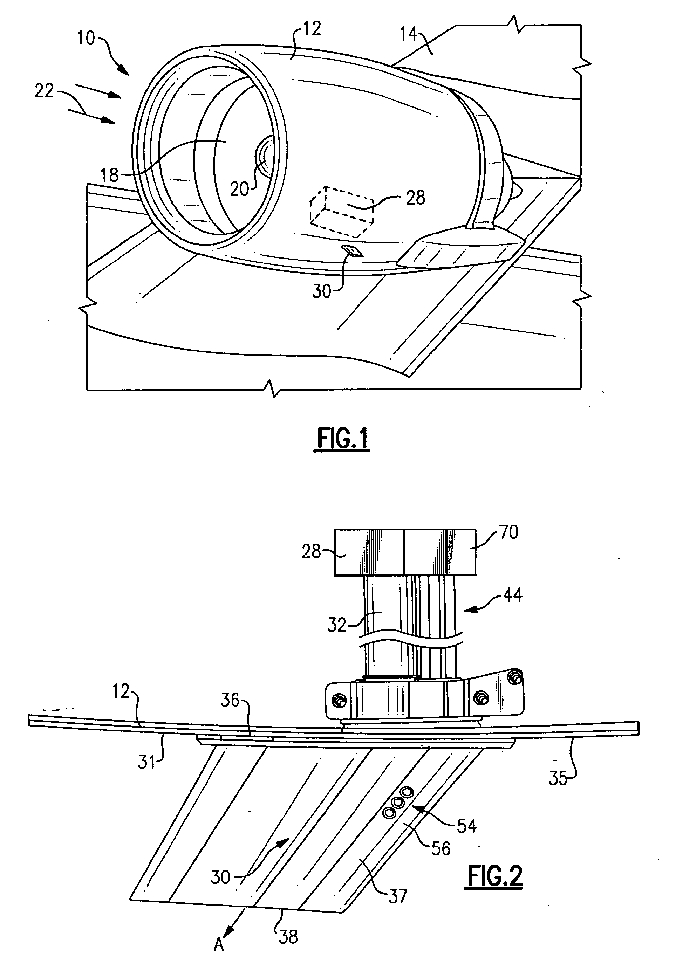

Figure 1 illustrates an aircraft engine assembly 10 enclosed by a nacelle 12. The nacelle 12 is suspended from an aircraft 14 by a mounting feature (not shown). The nacelle 12 includes an inlet 18 that defines airflow into the aircraft engine assembly 10. A fan 20 receives incoming airflow 22, and the airflow 22 enters the nacelle 12 through an inlet 18. The aircraft engine assembly 10 drives a gearbox 28 (shown in broken lines) that provides drive for engine accessories. The gearbox 28 is lubricated with oil.

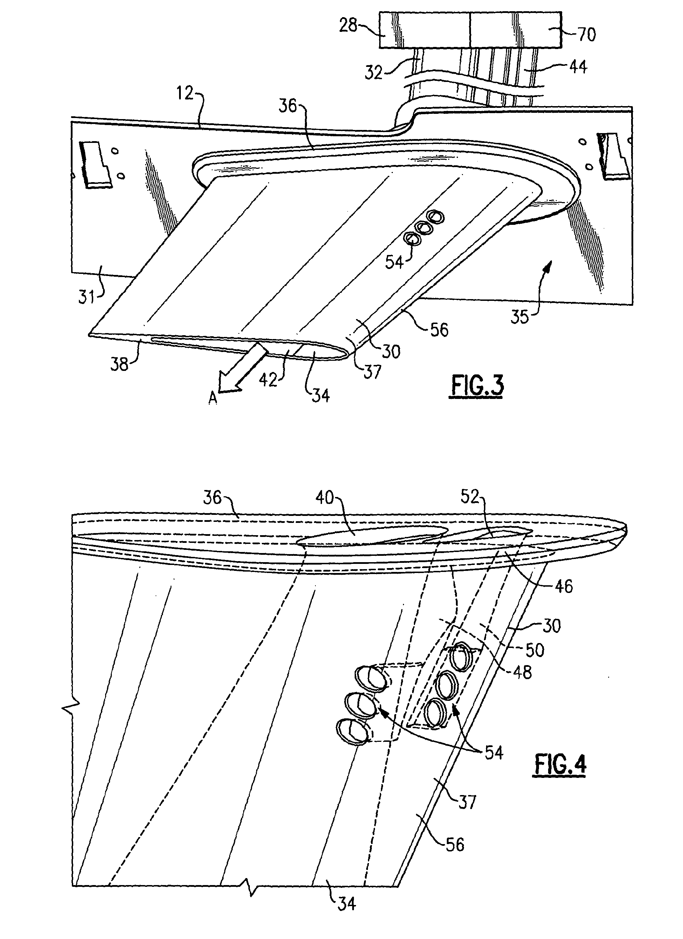

As shown in Figures 2 and 3, a combined gearbox breather and drain mast 30 is mounted on an outer skin 31 on an underside 35 of the nacelle 12. The combined gearbox breather and drain mast 30 includes a body 37 made of a solid composite material. In one example, the composite material is ceramic. The combined gearbox breather and drain mast 30 is a single integrated component made of one piece of material. Externally, the combined gearbox breather and drain mast 30 has a shape similar to a swept airfoil and is aerodynamic.

As shown in Figure 4, the interior of the combined gearbox breather and drain mast 30 is solid and includes a breather flow passage 34 and a separate internal drain passage 46. In one example, the breather flow passage 34 and the internal drain passage 46 are formed by a laser. In one example, the breather flow passage 34 and the internal drain passage 46 define an inner flow path that is approximately linear from a leading edge to a trailing edge of the combined gearbox breather and drain mast 30.

A breather pipe 32 extends from the gearbox 28 to the combined gearbox breather and drain mast 30. Air oil mist from bearing compartments of the gearbox 28 flows through the breather pipe 32. In one example, the breather pipe 32 is substantially circular in cross-section. The air oil mist from the breather pipe 32 flows through the breather flow passage 34 in the combined gearbox breather and drain mast 30. That is, the breather flow passage 34 is in fluid communication with the breather pipe 32.

The breather flow passage 34 extends from an inlet 40 in an upper surface 36 of the combined gearbox breather and drain mast 30 to an outlet 42 in a lower surface 38 of the combined gearbox breather and drain mast 30. The inlet 40 has a substantially circular area, allowing attachment of the circular breather pipe 32 without a heavy transition component. A cross-section of the breather flow passage 34 changes from substantially circular at the inlet 40 to substantially elongated at the outlet 42 (shown in Figure 3). As the combined gearbox breather and drain mast 30 is made of a composite material, the shape of the breather flow passage 34 can change as the breather flow passage 34 extends from the inlet 40 to the outlet 42. The air oil mist from the gearbox 28 exits the combined gearbox breather and drain mast 30 through the outlet 42 and flows in a direction A. The opening 42 ensures that pressure does not build up in the combined gearbox breather and drain mast 30.

Drain lines 44 drain overflowing or leaking liquids from one or more one engine component 70 during engine operation. For example, the engine component 70 can be a fuel oil cooler, a lube pump, a fuel pump, a hydraulic system or a generator.

In one example, three drain lines 44 drain liquid fuel or oil from the engine component 70 to the combined gearbox breather and drain mast 30. The liquids from the drain lines 44 flows through the internal drain passage 46. That is, the internal drain passage 46 is in fluid communication with the drain lines 44.

The internal drain passage 46 extends from an inlet 52 in the upper surface 36 of the combined gearbox breather and drain mast 30 to an outlet 54 in a side surface 56 of the combined gearbox breather and drain mast 30. In one example, the internal drain passage 46 includes two branches 48 and 50, and each branch 48 and 50 includes three outlets 54, providing six total outlets 54. In one example, the outlets 54 have a circular shape. The outlets 54 of each branch 48 and 50 can be aligned along a diagonal line. The natural pressure distribution over the combined gearbox breather and drain mast 30 produces a pressure differential to drain the fluids through the internal drain passage 46 and pushes them away from the nacelle 12.

The combined gearbox breather and drain mast 30 made of the composite material reduces the weight and the cost of the propulsion system. The combined gearbox breather and drain mast 30 serves as a fluid drain, without needing two separate components.

The foregoing description is only exemplary of the principles of the invention. Many modifications and variations of the present invention are possible in light of the above teachings. The preferred embodiments of this invention have been disclosed, however, so that one of ordinary skill in the art would recognize that certain modifications would come within the scope of this invention. It is, therefore, to be understood that within the scope of the appended claims, the invention may be practiced otherwise than as specially described. For that reason the following claims should be studied to determine the true scope and content of this invention.

## Claims

1. A combined gearbox breather and drain mast (30) comprising:
a body portion (37) made of a single component that is mountable to a nacelle (12);
a first passage (34) in fluid communication with a gearbox (28); and
a second passage (46) in fluid communication with an engine component (70), wherein the first passage is separate from the second passage.

2. The combined gearbox breather and drain mast (30) as recited in claim 1 wherein an engine drives the gearbox (28).

3. The combined gearbox breather and drain mast (30) as recited in claim 2 wherein the engine is enclosed by a nacelle (12), and the nacelle (12) is suspended from an aircraft.

4. The combined gearbox breather and drain mast (30) as recited in any preceding claim wherein the combined gearbox breather and drain mast (30) is mounted on an underside of a nacelle (12).

5. The combined gearbox breather and drain mast (30) as recited in any preceding claim wherein the combined gearbox breather and drain mast (30) is made of a composite material.

6. The combined gearbox breather and drain mast (30) as recited in claim 5 wherein the composite material is ceramic.

7. The combined gearbox breather and drain mast (30) as recited in any preceding claim wherein the first passage (34) extends from an inlet (40) to an outlet (42), and the inlet (40) has a substantially circular cross-section and the outlet (42) has a substantially elongated cross-section.

8. The combined gearbox breather and drain mast (30) as recited in any preceding claim wherein a breather pipe (32) extends from the gearbox (28) to the first passage (34); and
drain lines (44) extend from the engine component (70) to the second passage (46), wherein air oil mist flows through the first passage (34) and liquid oil and fuel flow through the second passage (46).

9. The combined gearbox breather and drain mast (30) as recited in any preceding claim wherein the second passage (46) includes two branches.

10. The combined gearbox breather and drain mast (30) as recited in any preceding claim wherein each of the two branches includes three outlets (54).

11. The combined gearbox breather and drain mast (30) as recited in any preceding claim wherein the engine component (70) is at least one of a fuel oil cooler, a lube pump, a fuel pump, a hydraulic system and a generator.

12. A nacelle assembly comprising:
a nacelle (12);
an engine enclosed by the nacelle (12);
a gearbox (28) driven by the engine;
an engine component (70); and
a combined gearbox breather and drain mast (30) as claimed in any preceding claim, mounted to the nacelle (12).

13. A method of making a combined gearbox breather and drain mast (30) that is mountable to a nacelle (12), the method comprising the steps of:
forming a body portion of a single component;
forming a first passage (34) with a laser; and
forming a second passage (46) with the laser, wherein the first passage (34) is separate from the second passage (46).

14. The method as recited in claim 13 further comprising attaching the combined gearbox breather and drain mast (30) to a nacelle (12) such that the first passage (34) is in fluid communication with a gearbox (28) and the second passage (46) is in fluid communication with an engine component (70).

15. The method as recited in claim 14 further including the steps of flowing air oil mist from the gearbox (28) through the first passage (34) and flowing liquid oil and fuel from the engine component through the second passage (46).
